# EUROPEAN PATENT SPECIFICATION

(11) **EP 1 947 849 B1**
(45) Date of publication and mention of the grant of the patent: **17.11.2010**
(21) Application number: 06810759.8
(22) Date of filing: 28.09.2006
(51) Int. Cl.: H04N 5/93, H04N 5/445, H04N 5/91

(54) **RECORDED DATA REPRODUCTION DEVICE AND PROGRAM**
EINRICHTUNG UND PROGRAM ZUR WIEDERGABE AUFGEZEICHNETER DATEN
PROGRAMME ET DISPOSITIF DE REPRODUCTION DE DONNEES ENREGISTREES

(30) Priority: 13.10.2005 JP 2005298663
(43) Date of publication of application: 23.07.2008
(73) Proprietor: Pioneer Corporation, Tokyo 153-8654 (JP)
(72) Inventor: NAKAMURA, Harumi, Tokorozawa-shi Saitama 359-8522 (JP); HASHIMOTO, Shinya, Tokorozawa-shi Saitama 359-8522 (JP)
(74) Representative: Haley, Stephen
(86) International application number: PCT/JP2006/319312
(87) International publication number: WO 2007/043347

(56) References cited:
- EP-A- 1 094 409
- EP-A- 1 304 874
- WO-A-02/19700
- JP-A- 04 044 475
- JP-A- 2000 175 140
- JP-A- 2002 281 449
- JP-A- 2004 157 617
- JP-A- 2005 026 850
- US-A1- 2002 184 628
- US-A1- 2005 160 452

## Description

### Technical Field

The present invention relates to a recorded data playback device and a program that playback recorded data including a content formed by at least video information.

### Background Art

In recent years, it is a common practice to record a content that includes at least video information distributed through broadcasting or a network, and playback to watch the recorded content at a later date. With an increase in storage capacity for storing recorded data, recording methods have varied and the quantity of recorded data has increased enormously, for example, the user inputs a keyword and all the television programs associated with the input keyword are recorded. To search recorded data, a method of generating summarized data (digest) in which recorded data is summarized and searching desired recorded data by using the summarized data (for example, refer to Patent Document 1), and a method of searching recorded data by using a part of the video and a thumbnail of the recorded data (for example, refer to Patent Document 2) have been disclosed.
[Patent Document 1] JP-A-2001-155470
[Patent Document 2] JP-A-2003-319295

In particular, Patent Document 1 discloses that recorded information (e.g., a recorded date and time, a program title and the like) is listed and displayed, and when a user selects a piece of recorded information of summarized data wanted to be played back from the recorded information being listed and displayed, the user can watch the summarized data of the selected recorded information and search the recorded data, by moving to a summarized data playback screen of the selected recorded information. Also, Patent Document 2 discloses that thumbnails and recorded information of a plurality of pieces of recorded data are arranged and displayed on a single screen, and when a user selects any one of the thumbnails, only the selected thumbnail switches to a moving image, thereby enabling to search the recorded data by watching the moving image.
WO 02/19700 discloses a playback device according to the preamble of claims 1 and 9.

### Disclosure of the Invention

In the former searching method of Patent Documents 1 or 2, the listing screen of the recorded information and the summarized data playback screen are formed on different screens. Accordingly, the user needs to switch between the digest playback screen and the listing screen of the recorded information, whenever he/she wants to watch the summarized data sequentially. This is a complicated operation and also inefficient, because it requires a lot of searching time. In the latter searching method, the moving image switched from a thumbnail is sequentially read and played back from the top of the recorded data. Accordingly, when the content cannot be recognized from the top of the recorded data, the user inconveniently needs to watch the moving image for a long period of time.

The present invention has been made in view of the above-described problems and it is an object of the present invention to provide a recorded data playback device and a program having preferable operability and being capable of effectively searching for recorded data.

### Means for Solving the Subject

A recorded data playback device of the present invention includes storage means that stores at least one piece of recorded data in which a content formed by at least video information is correlated with a content identifier for identifying the content and accompanying information related to the number of times each piece of recorded data has been played back, summarized data generation means that generates summarized data of the recorded data based on the content, list generation means that generates an identifier list showing a list of content identifiers, display control means that displays the generated identifier list and a playback video of the at least one piece of generated summarized data on a single screen, and playback control means that varies playback time of each piece of the summarized data based on the accompanying information."

With this configuration, the identifier list showing a list of content identifiers and the playback video of the at least one piece of generated summarized data are collectively displayed on a single screen. Accordingly, a user can watch the identifier list and the summarized data playback video at the same time, simply by carrying out an operation to display the single screen. In other words, it is possible to watch a list of content identifiers by watching the screen displayed, and search for recorded data while watching the playback video of the summarized data. Accordingly, the trouble and time required for searching recorded data can be reduced greatly. Because the summarized data in which the recorded data is summarized is playback, the content of the recorded data can be recognized easily, compared with simply reading and playing back the recorded data sequentially from the top.
Furthermore, with this configuration, for example, it is possible to carry out the control to change the playback time depending on whether the recorded data has been played back and to reduce the playback time in proportion to the number of playback times. In other words, the time required for searching can be reduced by relatively reducing the playback time of the summarized data when it is likely that the user has recognized the content of recorded data, while maintaining the utility value of the summarized data in search for recorded data.
In this case, it is preferable that each content identifier further include a program title for the content associated therewith."

With this configuration, a program title can further be included in the content identifier. In other words, it is possible to provide the user with more detailed information, and searching for recorded data becomes further easier.

In this case, it is preferable that the recorded data playback device further include manual selection means that selects any one of the content identifiers from the identifier list, and that the display control means display the playback video of the summarized data in which the recorded data including the selected content identifier is summarized.

With this configuration, any one of the content identifiers of the summarized data to be played back can be selected in the identifier list. Therefore, the user can watch various summarized data simply by carrying out a selection operation for selecting any one of the content identifiers, thereby enabling to search for recorded data further efficiently.

In this case, it is preferable that the recorded data playback device further include automatic selection means that sequentially selects content identifiers from the identifier list, and that the display control means display the playback video of the summarized data in which the recorded data including the selected content identifiers is summarized.

With this configuration, the content identifiers are sequentially selected from the identifier list, thereby switching the playback video of the summarized data displayed in synchronism with the content identifiers. In other words, the user can watch various summarized data without carrying out any operation, thereby improving operability. The selection order of the content identifiers may not be in arrangement order but may be selected at random.

In this case, it is preferable that the display control means further display at least one of a playback button for instructing normal playback of the recorded data, an edit button for instructing editing of the recorded data, and a delete button for instructing deletion of the recorded data on the single screen.

With this configuration, it is possible to move from the single screen at least to any one of the processes: a playback process for normally playing back recorded data, an editing process for editing recorded data, and a deletion process for deleting recorded data. Accordingly, the user can move to a desired process simply by selecting any one of the buttons, thereby saving the user from operating a complicated operation to carry out these processes.

In this case, it is preferable that each of the content identifiers include a recording start date and time, and a recorded channel, that the storage means store accompanying information related to the number of times each piece of recorded data has been played back, and that the list generation means rearrange the content identifiers of the identifier list, based on at least one of the content identifiers and the accompanying information.

With this configuration, it is possible to rearrange the content identifiers based on at least one of the content identifiers and the accompanying information, thereby enabling to easily specify a desired content identifier. An example of rearrangement may be in time-sequence of the recording start date and time, in a manner to put unplayed-back ones at the top, or according to program categories.

In this case, it is preferable that the display control means further display a rearrange button for instructing the rearrangement on the single screen.

With this configuration, by further displaying the rearrange button for rearranging each content identifier of the identifier list, the user can easily carry out an operation for rearrangement.

In this case, it is preferable that the display control means further display a thumbnail corresponding to each content identifier of the identifier list, which the thumbnail is a part of the summarized data in which the recorded data including the content identifier is summarized.

With this configuration, the identifier and the corresponding thumbnail are displayed adjacent to each other. Therefore, the recorded data represented by the identifier can be recognized further in a video (image), thereby enabling to search the recorded data further easier.

Another recorded data playback device of the present invention includes storage means that stores at least one piece of recorded data in which a content formed by at least video information is correlated with a content identifier for identifying the content, summarized data generation means that generates summarized data of the recorded data based on the content, list generation means that generates an identifier list showing a list of content identifiers, display control means that displays the generated identifier list and a playback video of the at least one piece of generated summarized data on a single screen, playback searching means that searches a playback candidate of the recorded data while playing back and displaying the summarized data on a display device, and deletion searching means that searches a deletion candidate of the recorded data while playing back and displaying the summarized data on the display device, and playback time of the summarized data with the deletion searching means is shorter than the playback time of the summarized data with the playback searching means."

With this configuration, when searching for the recorded data to be a deletion candidate, it is possible to save the user from watching the summarized data for a long period of time. In other words, by changing the playback time of the summarized data depending on the purpose of searching, searching efficiency can further be improved.

A program according to the present invention realizes functions of each means in the recorded data playback device.

By using the program, it is possible to realize the recorded data playback device having preferable operability and being capable of effectively searching for recorded data.

### Brief Description of the Drawings

[Fig. 1] Fig. 1 is a block configuration diagram of a recorded data playback device according to an embodiment of the present invention.
[Fig. 2] Fig. 2 is a control flowchart of the recorded data playback device executed when recording has completed.
[Fig. 3] Fig. 3 is a diagram showing an example of a list/playback screen for displaying a playback video of summarized data and an identifier list on a single screen.
[Fig. 4] Fig. 4 is a flowchart showing selection control of one of the content identifiers in the identifier list.
[Figs. 5A to 5C] Figs. 5A to 5C are explanatory diagrams for explaining an example of rearrangement of the identifier list.
[Fig. 6] Fig. 6 is a control flowchart for varying a playback time based on accompanying information.
[Figs. 7A and 7B] Figs. 7A and 7B are explanatory diagrams for explaining an example of selecting a search type.
[Fig. 8] Fig. 8 is a control flowchart of reducing the playback time based on a search type.

### Reference Numerals

- 10: recorded data playback device
- 30: control section
- 32: summarized data generation unit
- 34: playback control unit
- 35: list generation unit
- 36: selection unit
- 40: storage section
- 41: recorded data storage unit
- 50: playback/displaying section
- 53: display control unit
- 110: playback video
- 120: identifier list
- CI: content identifiers
- D1: list/playback screen

### Best Mode for Carrying Out the Invention

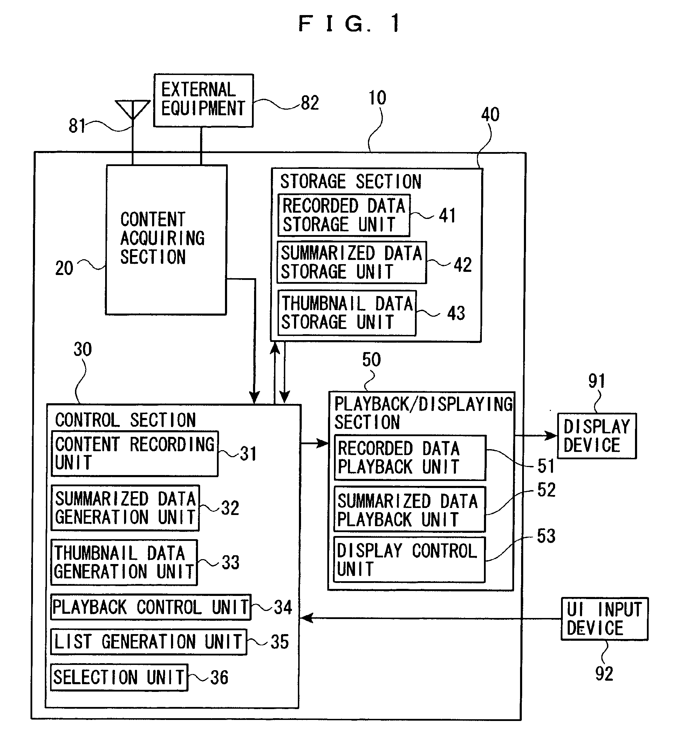

Exemplary embodiments of a recorded data playback device and a program according to the present invention will be described in detail below with reference to the accompanying drawings. Fig. 1 is a block configuration diagram of a recorded data playback device 10 according to an embodiment of the present invention. As shown in the diagram, the recorded data playback device 10 includes a content acquiring section 20 for acquiring a content containing at least video information from outside, a control section 30 for carrying out various controls, a storage section 40 for storing recorded data in which the content is recorded, and a playback/displaying section 50 for playing back recorded data and summarized data, and for carrying out the control to display a playback video of the recorded data and the summarized data on a display device 91.

A main component of the content acquiring section 20 is a tuner to receive a television broadcast, such as terrestrial broadcast, BS, or CS, through a receiving antenna 81. To acquire a content from external equipment 82 (such as a television set, a personal computer, and various tuners that include an external output terminal), an external input terminal is the main component of the content acquiring section 20. Although not shown, the content acquiring section 20 may acquire video information distributed via a communication network such as the Internet. When various semiconductor memories or an optical disk reader are installed as the content acquiring section 20, the content recorded in them can also be acquired. The content acquiring section 20 can also acquire detailed information related to a content, such as a program title and a program category of the content, with the content from an acquiring source (for example, a television broadcasting station) of the content such as an electric program guide (EPG).

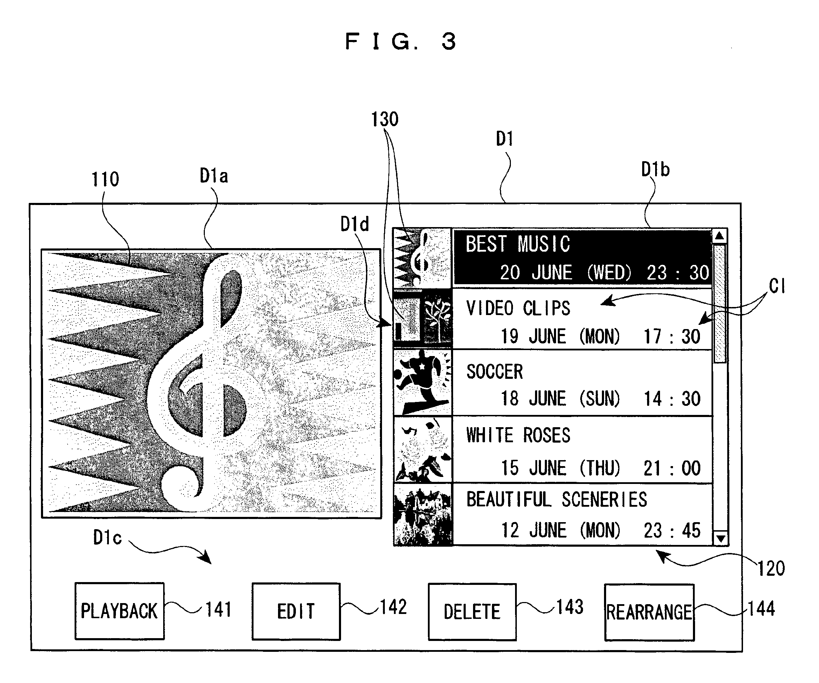

The control section 30 carries out various controls by controlling each section of the recorded data playback device 10. More specifically, the control section 30 includes a content recording unit 31 for recording an acquired content, a summarized data generation unit 32 for generating summarized data based on the recorded content, a thumbnail data generation unit 33 for generating thumbnail data of the recorded data, a playback control unit 34 for controlling playback of the summarized data, a list generation unit 35 for generating an identifier list 120 (see Fig. 3) that shows a list of content identifiers CI (which will be described later; see Fig. 3) for identifying the content, and a selection unit 36 for selecting one of the content identifiers CI from the identifier list 120. The selection unit 36 selects the content identifier CI, based on a signal transmitted from a user interface (UI) input device 92, such as a remote controller that a user uses for carrying out various instructions with respect to the recorded data playback device 10. Any one of the content identifiers CI may be selected (manual selection means) or the content identifiers CI may be selected sequentially from the identifier list 120 (automatic selection means).

The summarized data generated by the summarized data generation unit 32 is data related to an extraction starting position of one or more partial scenes extracted as summarized data and an extraction time from each extraction starting position from the recorded content. Similarly, the thumbnail data that is generated by the thumbnail data generation unit 33 is data related to an extraction position of a scene (image) displayed as a thumbnail in the recorded content. Each extraction starting position of each partial scene that is extracted as extraction data is dispersed and disposed in the entire content of the recorded data. In other words, the entire recorded data is summarized in the summarized data.

The storage section 40 includes a recorded data storage unit 41 for storing the recorded data that is recorded by the content recording unit 31, a summarized data storage unit 42 for storing the summarized data generated by the summarized data generation unit 32, and a thumbnail data storage unit 43 for storing the thumbnail data generated by the thumbnail data generation unit 33. The recorded data storage unit 41 correlates the recorded content with the content identifier CI (for example, a recording start date and time, and a recording channel; to be included when the content acquiring section 20 acquires detailed information such as a program title) for identifying the recorded content, and stores as the recorded data. Also, as the accompanying information, the number of times the recorded data has been played back is stored with each piece of recorded data. An initial value of the number of times of playback is "0", and every time the recorded data is played back by the recorded data playback unit 51, the control section 30 counts up the number of playback. Information related to the corresponding recorded data (for example, content identifier CI) is added to the summarized data and the thumbnail data. The storage section 40 can be formed by a hard disk, various semiconductor memories, various optical disks, and the like, and the type is not limited.

The playback/displaying section 50 includes a recorded data playback unit 51 for playing back recorded data, a summarized data playback unit 52 for playing back the summarized data, and a display control unit 53 for carrying out the control to display the identifier list 120 generated by the list generation unit 35 and a playback video 110 of the summarized data on the display device 91.

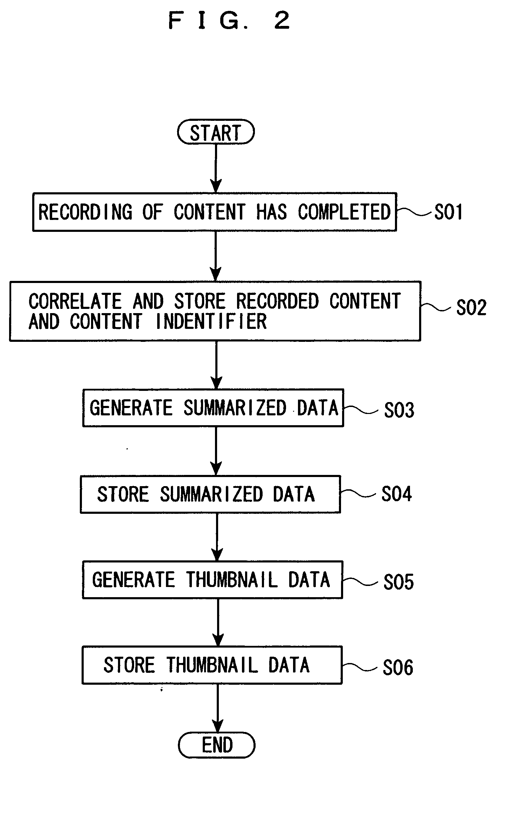

The control carried out by the recorded data playback device 10, when recording with respect to one content has completed, will be explained briefly with reference to the flowchart in Fig. 2. As shown in the flowchart, when the recording of a content has completed in the content recording unit 31 (S01), the recorded content and the content identifier CI for identifying the content are correlated, and stored in the recorded data storage unit 41 as recorded data (S02). At this time, as the accompanying information, the number of times of playback is set to "0". Then, the summarized data is generated at the summarized data generation unit 32 (S03), and stored in the summarized data storage unit 42 (S04). It is obvious that the generation of the summarized data may be formed in synchronism with the recording.

The thumbnail data is generated at the thumbnail data generation unit 33 (S05) and stored in the thumbnail data storage unit 43 (S06). In the recorded data playback device 10 according to the present embodiment, the thumbnail data generation unit 33 generates thumbnail data from a scene (image) included in the summarized data. Accordingly, the image displayed as a thumbnail can be limited to the main portion of the content. For example, the first scene (image) of the summarized data may be a thumbnail. Or, when a highlight scene (a characteristic scene in the content, such as the result of a sporting match and the end of a drama) is included in the summarized data, the scene (image) may be displayed as a thumbnail.

Next, a display screen displayed on the display device 91 by the control of the display control unit 53 will be explained specifically with reference to Fig. 3. The diagram shows an example of a list/playback screen D1 for displaying the identifier list 120 and the playback video 110 of the summarized data on a single screen. The list/playback screen D1, for example, is displayed by turning on the power of the recorded data playback device 10 and triggered by a predetermined operation of the UI input device 92 operated by the user. As shown in the diagram, the list/playback screen D1 includes a playback video display D1a for displaying a playback video of the summarized data, a list display D1b for displaying the identifier list 120, and a button array D1c in which various function buttons for moving to a process of carrying out playback and deletion of the recorded data are arranged.

In the list display D1b, each content identifier CI of each piece of recorded data stored in the recorded data storage unit 41 is listed and displayed as the identifier list 120. More particularly, when displaying of the list/playback screen D1 is instructed, the list generation unit 35 extracts the content identifiers CI in the recorded data storage unit 41 and generates the identifier list 120. The display control unit 53 then carries out the control to display the generated identifier list 120 on the list display D1b. The identifier list 120 will be displayed on the list display D1b through these processes. According to an example of the present embodiment, a program title and a recording start date and time are stored as the content identifier CI, and the program title and the recording start date and time of each piece of recorded data are displayed on the identifier list 120.

A thumbnail display D1d for displaying a thumbnail 130 of each piece of recorded data is arranged at a position corresponding to each content identifier CI of the identifier list 120. On the thumbnail display D1d, the thumbnail 130 is displayed based on the thumbnail data stored in the thumbnail data storage unit 43. More particularly, when displaying of the list/playback screen D1 is instructed, the display control unit 53 carries out the control to display the thumbnail 130 that corresponds to the content identifier CI of the content, on the thumbnail display D1d. The process will be repeated for the entire recorded data.

On the playback video display D1a, the playback video 110 of the summarized data played back by the summarized data playback unit 52 is displayed by the control of the display control unit 53. The playback video 110 displayed on the playback video display D1a, in the identifier list 120, is a playback video of the summarized data in which the recorded data of the content identifier CI selected by the selection unit 36 is summarized. In other words, the summarized data playback unit 52 selects the recorded data including one of the content identifiers CI selected by the selection unit 36 from the recorded data storage unit 41. Then, the summarized data is played back, by selecting the summarized data of the selected recorded data from the summarized data storage unit 42. The content identifier CI selected by the selection unit 36 is reversely displayed by the display control unit 53, for example, as shown in the diagram. The playback video 120 of the summarized data displayed on the playback video display D1a can be reduced and displayed on the corresponding thumbnail display D1d, in synchronism with the playback of the summarized data.

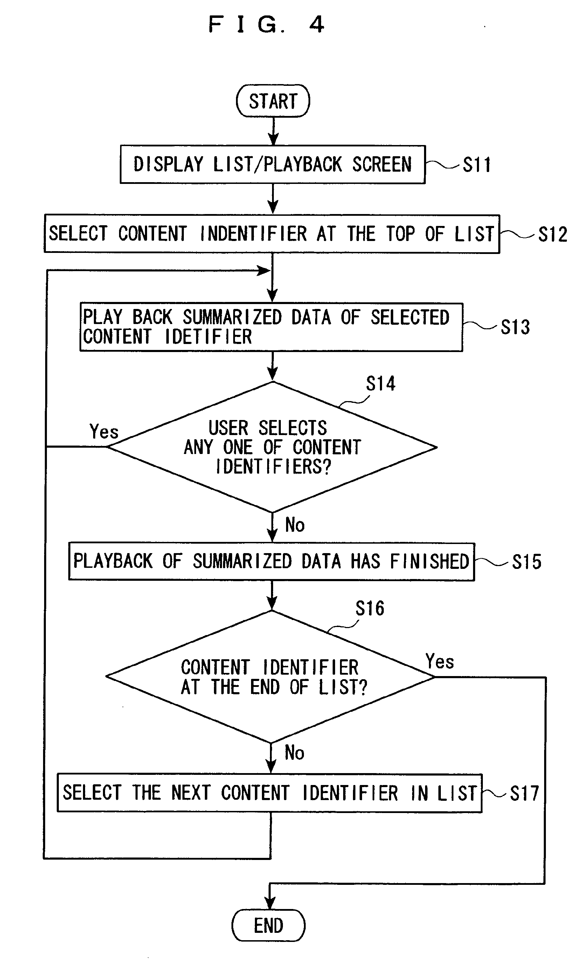

The selection control of one of the content identifiers CI by the selection unit 36 will now be explained in detail. As shown above, the selection unit 36 selects one of the content identifiers CI, based on the instruction from the UI input device 92. The selection unit 36 may select any one of the content identifiers CI or may sequentially select content identifiers CI from the identifier list 120. The control will be explained with reference to the flowchart shown in Fig. 4.

As shown in the flowchart, with the display of the list/playback screen D1 (S11), the selection unit 36, for example, selects the content identifier CI positioned at the top of the identifier list 120 (S12). Then, the summarized data playback unit 52 playbacks the summarized data of the selected content identifier CI (S13). While playing back the summarized data, when the user selects any one of the content identifiers CI by operating the UI input device 92 (S14: Yes), the summarized data playback unit 52 starts the playback of the summarized data of the selected content identifier CI (S13). If the user does not select any one of the content identifiers CI (S14: No), and the playback of the summarized data is finished (S15), the selection unit 36 determines whether the content identifier CI selected at present is the content identifier CI positioned at the end of the identifier list 120 (S16). If the content identifier CI selected at present is not the content identifier CI positioned at the end of the identifier list 120 (S16: No), the content identifier CI positioned next to the content identifier CI selected at present in the identifier list 120 is re-selected (S17). The summarized data playback unit 52 then playbacks the summarized data of the selected content identifier CI (S13). These processes will be repeated until the playback of the summarized data of the content identifier CI positioned at the end of the identifier list 120 is finished (S16: Yes).

In the above example, the content identifier CI selected by the selection unit 36 at first is the content identifier CI positioned at the top of the identifier list 120 (as described in S12). However, the content identifier CI of the recorded data with the most recent recording start date and time may be selected, or the content identifier CI that was selected when the previous display of the list/playback screen D1 was finished may be selected. Also, instead of selecting the content identifier CI by the arrangement order of the identifier list 120 (as described in S17), the content identifier CI may be selected at random. Even when the playback of the entire summarized data is finished, the playback of the summarized data may be repeated while the list/playback screen D1 continues to display.

Referring back to the explanation of the list/playback screen D1 shown in Fig. 3, the button array D1c set under the list/playback screen D1 includes a playback button 141 for instructing normal playback of the recorded data, an edit button 142 for instructing editing of the recorded data, a delete button143 for instructing deletion of the recorded data, and a rearrange button 144 for rearranging the content identifiers CI of the identifier list 120. Therefore, when the user selects each button using the UI input device 92 while the list/playback screen D1 is displayed, it is possible to move to each process of the normal playback, the editing, and the deletion of the recorded data. Also, the content identifiers CI of the identifier list 120 can be rearranged.

For example, when the playback button is selected by the UI input device 92, the recorded data playback unit 51 carries out the control to playback the recorded data, and the display control unit 53 carries out the control to display the playback video of the recorded data. While detailed explanations of the editing process and the deletion process of the recorded data will be omitted, both entail receiving an instruction from the UI input device 92 and the control section 30 starts the control to carry out the processes. When these buttons are selected, the recorded data to be processed is the recorded data including the content identifier CI selected by the selection unit 36 in the identifier list 120. While in the present embodiment, an example of arranging "buttons" for moving to each process is explained, letters and icons may be displayed instead of the "buttons".

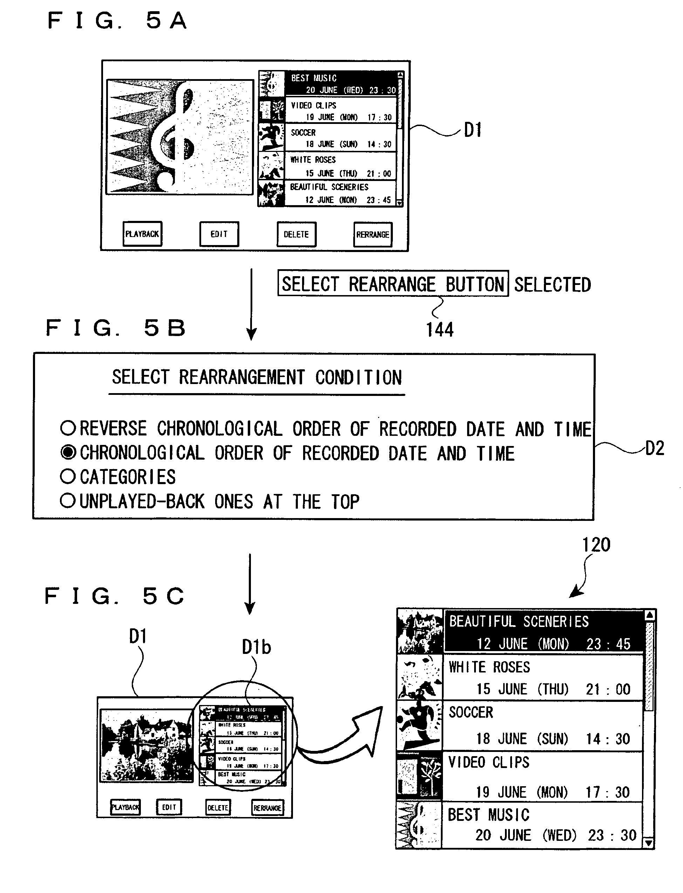

The control to be executed when the rearrange button 144 is selected will now be explained with reference to Figs. 5A a to 5C. As shown in Fig. 5A, when the rearrange button 144 is selected while the list/playback screen D1 is displayed, the display control unit 53 displays a rearrangement selection screen D2 shown in Fig. 5B on the display device 91. The rearrangement selection screen D2 is a screen for selecting rearrangement conditions to rearrange the content identifiers CI. In the present embodiment, four conditions of a "reverse chronological order of the recorded date and time", a "chronological order of the recorded date and time", "categories", and "unplayed-back ones at the top" are displayed as the rearrangement conditions. (In order to rearrange by the "categories", the content acquiring section 20 needs to obtain a "program category" of each content.)

While the rearrangement selection screen D2 is displayed, when the user selects the rearrangement condition by using the UI input device 92 and carries out the operation to define this, the list generation unit 35 rearranges the content identifiers CI, based on the defined rearrangement conditions, thereby generating the identifier list 120. For example, when the "chronological order of the recorded date and time" is defined as the rearrangement condition, the list generation unit 35 generates a list by extracting the content identifiers CI in chronological order of the recording start date and time that are included in the content identifiers CI. When the generating process of the identifier list 120 is completed, the display control unit 53 carries out the control to display the identifier list 120 on the list display D1b. Accordingly, as shown in Fig. 5C, the identifier list 120 in which the content identifiers CI are rearranged in the "chronological order of the recorded date and time" will be displayed.

Similarly, for example, when the "categories" is defined as the rearrangement condition, the list generation unit 35 generates a list by grouping the content identifiers CI by the program category included in the content identifiers CI. When "unplayed-back ones at the top" is defined as the rearrangement condition, the list generation unit 35 separates the content identifiers CI with the number of times of playback is "0" from the other content identifiers CI. Then, the list generation unit 35 generates a list by sequentially extracting the content identifiers CI from the content identifiers CI with the number of times of playback is "0". When the identifier list 120 is generated next time, the identifier list 120 will be generated according to the rearrangement condition selected on the rearrangement selection screen D2.

The playback control related to the playback of the summarized data carried out by the playback control unit 34 will now be explained in detail. As described above, the accompanying information related to the number of times each piece of recorded data has been played back is stored in the recorded data storage unit 41. The playback control unit 34 executes the control to vary the playback time of each piece of summarized data based on the accompanying information.

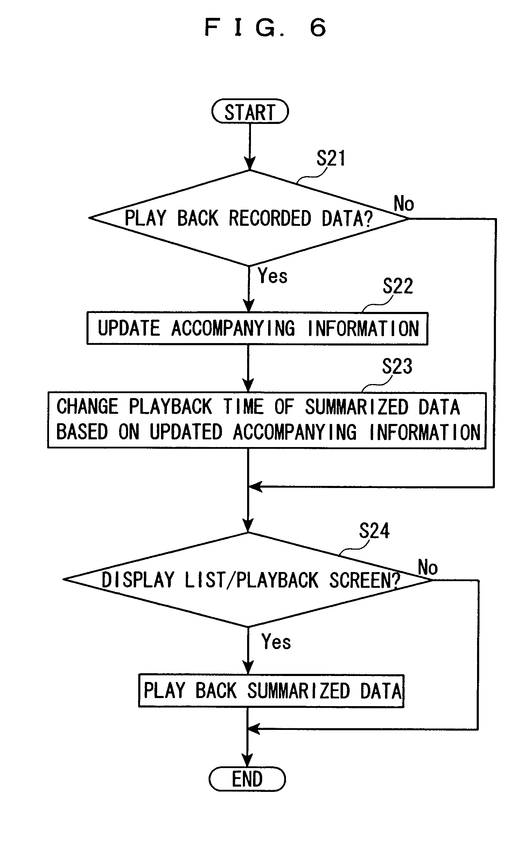

Fig. 6 is a control flowchart for varying playback time. As shown in the flowchart, when the recorded data playback unit 51 carries out playback of the recorded data (S21), the control section 30 counts up the number of times the recorded data has been played back and updates the accompanying information (S22). Having the update of the accompanying information as a trigger, the playback control unit 34 carries out the control to change the playback time of the summarized data (S23). Then, according to the display of the list/playback screen D1 (see Fig. 3) (S24: Yes), the summarized data playback unit 52 carries out playback of the summarized data (S25).

The "control to change the playback time of the summarized data" (described in S23) means to change the extraction time of each partial scene extracted as the summarized data. More specifically, the extraction time of each partial scene is reduced, in proportion to the number of times of playback stored as the accompanying information. In other words, the summarized data is generated every time the accompanying information is updated. In this case, the extraction time of each partial scene may be equally reduced, or the extraction time of only specific partial scenes may be extremely reduced.

Also, instead of generating the summarized data every time the accompanying information is updated, the summarized data up to the maximum duration may be generated in advance to vary only the playback time. In this case, the playback control unit 34, in synchronism with an execution of playing back the summarized data, determines the playback time by referring to the accompanying information of the recorded data corresponding to the summarized data to be played back. Then, the playback for the duration of playback time that has been determined with respect to the summarized data playback unit 52 will be carried out.

Instead of reducing the playback time of the summarized data in proportion to the number of times the recorded data has been played back, the playback time may be changed depending on whether the recorded data has been played back, in other words, whether the number of times of playback is "0". Instead of the number of times of playback, it may be formed to change the playback time of the summarized data depending on the accumulated playback time of the recorded data. As such, when it is highly likely that the playback time of the summarized data is varied depending on the number of times the recorded data has been played back, in other words, that the user recognizes the content of the recorded data, processing efficiency can be improved by relatively reducing the playback time of the summarized data, for example, when the user searches recorded data using the list/playback screen D1.

The user may use the list/playback screen D1 for searching recorded data. The searching for recorded data may be to search the recorded data to be a playback candidate or to search the recorded data to be a deletion candidate. In the recording data playback device 10 according to the present embodiment, an execution of the respective searching processes will be explained as a second embodiment.

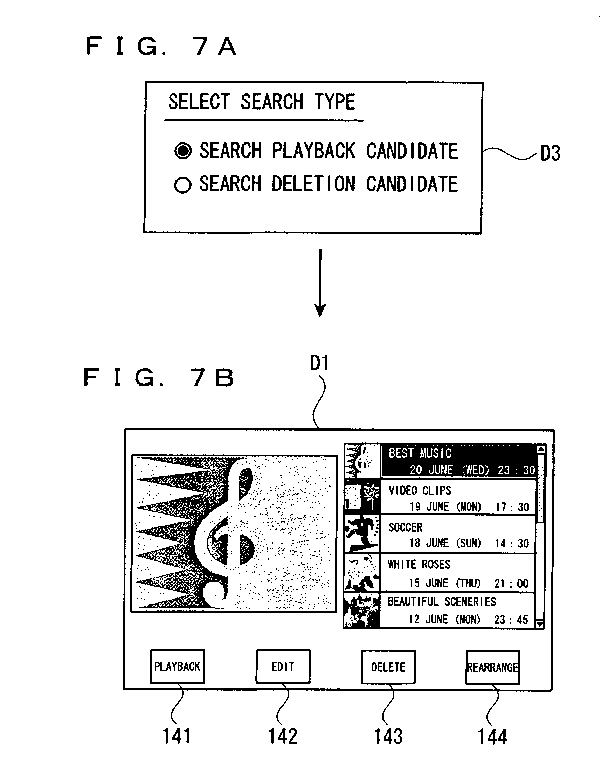

Fig. 7A shows an example of a search type specifying screen D3 that is displayed on the display device 91, when the user instructs to carry out searching by operating the UI input device 92. The user can select whether to search the recorded data to be a playback candidate, or to search the recorded data to be a deletion candidate, while the search type specifying screen D3 is displayed.

When the user selects the search type and carries out an operation to define this, the control section 30 maintains information related to the search type in the control section 30. When the search type is to search for a deletion candidate, the playback control unit 34 carries out the control to reduce the playback time of the summarized data, to save the user from watching the summarized data for a long period of time. In this case, to speed up the process, it is preferable to generate the summarized data up to the maximum duration in advance, and carry out the control to reduce the playback time only. In synchronism with this, the display control unit 53 carries out the control to display the list/playback screen D1 shown in Fig. 7B. The list/playback screen D1 shown in the diagram is arranged with various function buttons. When the search type is to search for a playback candidate, the delete button 143 may not be displayed, and when the search type is to search for a deletion candidate, the playback button 141 may not be displayed.

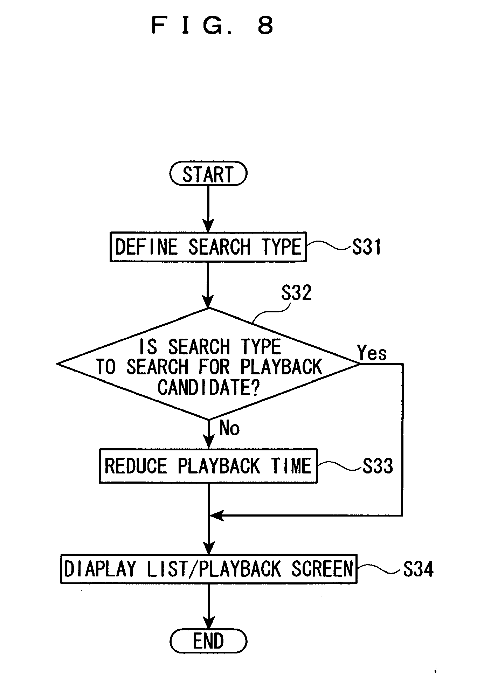

Fig. 8 is a control flowchart to carry out the search for a playback candidate or the search for a deletion flowchart. As shown in the diagram, when the user selects the search type on the search type specifying screen D3 and carries out the operation to define this (S31), the playback control unit 34 determines whether the search type is to search for a playback candidate or to search for a deletion candidate (S32). If the search type is a deletion candidate (S32: No), the control to reduce the playback time will be carried out (S33). If the search type is a playback candidate (S32: Yes), no action will be taken. In synchronism with the control by the playback control unit 34, the display control unit 53 carries out the control to display the list/playback screen D1 (see Fig. 7B), thereby displaying the list/playback screen D1 on the display device 91 (S34).

As described above, the user can select the search type with the recorded data playback device 10 according to the second embodiment. When the search type is to search for a deletion candidate, the playback control unit 34 reduces the playback time of the summarized data. Accordingly, when the recorded data to be a deletion candidate is searched, it is possible to save the user from watching the summarized data for a long period of time. In other words, by changing the playback time of the summarized data depending on the purpose of searching, searching efficiency can further be improved.

As explained above, the recorded data playback device 10 according to the present invention displays the identifier list 120 that shows a list of content identifiers CI, and the playback video 110 of at least one piece of generated summarized data, on a single screen. Accordingly, the user can watch both the identifier list 120 and the playback video 110 of the summarized data at the same time, simply by carrying out the operation to display the list/playback screen D1. Because the playback time of the summarized data is varied depending on the number of times the recorded data has been played back, for example, when the user searches the recorded data by using the list/playback screen D1, processing efficiency can further be improved.

While in the above description, the configuration with which the user carries out various operational instructions by using the UI input device 92 is explained, it may be formed so that an operation section is provided to the recorded data playback device 10, instead of the UI input device 92, thereby enabling the user to carry out various operational instructions by using this operation section.

In addition to varying the playback time of the summarized data depending on the accompanying information of the recorded data by the playback control unit 34, an extraction position of each partial scene extracted as summarized data may be changed. In this case, for example, only the first half of the entire contents may be limited as an extraction target of each partial scene. With this configuration, when the recorded data has not been played back, for example, various playback control of summarized data, such as generating summarized data by excluding end portions of the recorded data, can be available. Particularly, when the content has a plot that corresponds to program categories, such as an animation, a drama, a movie, and a sport program, this control will be effective.

Also, each section, unit, and function included in the recorded data playback device 10 according to each of the embodiments can be provided as a program. The program can also be stored and provided in a recording medium (not shown). Examples of such recording medium include: a CD-ROM, a flash ROM, a memory card (i.e., a compact flash (trade mark), a smart media, a memory stick), a compact disk, a magneto-optical disk, a digital versatile disk, a flexible disk, and a hard disk.

## Claims

1. A recorded data playback device comprising:
storage means that stores at least one piece of recorded data in which a content formed by at least video information is correlated with a content identifier for identifying the content;
summarized data generation means that generates summarized data of the recorded data based on the content;
list generation means that generates an identifier list showing a list of the content identifier;
display control means that displays the generated
identifier list and a playback video of the at least one piece
of generated summarized data on a single screen;
**characterized in that :**
said content formed by at least video information is also correlated with accompanying information related to the number of times each piece of recorded data has been played back ;
and said playback devices further comprises
playback control means that varies playback time of each piece of the summarized data based on the accompanying information.

2. The recorded data playback device according to claim 1, wherein each content identifier further includes a program title for the content associated therewith.

3. The recorded data playback device according to claim 1, further comprising:
manual selection means that selects any one of the content identifier from the identifier list; and
the display control means displays the playback video of the summarized data in which the recorded data including the selected content identifier is summarized.

4. The recorded data playback device according to claim 1, further comprising:
automatic selection means that sequentially selects the content identifiers from the identifier list; and
the display control means displays the playback video of the summarized data in which the recorded data including the selected content identifiers is summarized.

5. The recorded data playback device according to claim 1, wherein the display control means further displays at least one of a playback button for instructing normal playback of the recorded data, an edit button for instructing editing of the recorded data, and a delete button for instructing deletion of the recorded data on the single screen.

6. The recorded data playback device according to claim 1,
wherein
each of the content identifiers includes a recording start date and time, and a program channel,
the storage means stores the accompanying information related to the number of times each piece of recorded data has played back, and
the list generation means rearranges the content identifiers of the identifier list, based on at least one of the content identifiers and the accompanying information.

7. The recorded data playback device according to claim 6, wherein the display control means further displays a rearrange button for instructing the rearrangement on the single screen.

8. The recorded data playback device according to claim 1, wherein the display control means further displays a thumbnail corresponding to each content identifier of the identifier list, the thumbnail being a part of the summarized data in which the recorded data including the content identifier is summarized.

9. A recorded data playback device comprising:
storage means that stores at least one piece of recorded data in which a content formed by at least video information is
correlated with a content identifier for identifying the content;
summarized data generation means that generates summarized data of the recorded data based on the content;
list generation means that generates an identifier list showing a list of the content identifier;
display control means that displays the generated identifier list and a playback video of the at least one piece of generated summarized data on a single screen;
playback searching means that searches a playback candidate
of the recorded data while playing back and displaying the summarized data on a display device;
**characterised in that** it further comprises:
deletion searching means that searches a deletion candidate of the recorded data, while playing back and displaying the summarized data on the display device; wherein
playback time of the summarized data with the deletion searching means is shorter than the playback time of the summarized data with the playback searching means.

10. A program that enables a computer to function as each means in the recorded data playback device according to claim 1 or 9.

## Patentansprüche

1. Vorrichtung zur Wiedergabe aufgezeichneter Daten, die Folgendes umfasst:
ein Speichermittel, das mindestens ein aufgezeichnetes Datenstück speichert, in dem ein von mindestens Videoinformationen gebildeter Inhalt mit einem Inhaltskennung korreliert wird, um den Inhalt zu kennzeichnen;
ein Mittel zur Erzeugung zusammengefasster Daten, das zusammengefasste Daten der aufgezeichneten Daten basierend auf dem Inhalt erzeugt;
ein Listenerzeugungsmittel, das eine Kennungsliste erzeugt, die eine Liste der Inhaltskennung zeigt;
ein Anzeigesteuerungsmittel, das die erzeugte Kennungsliste und ein Wiedergabevideo des mindestens einen Stücks erzeugter zusammengefasster Daten auf einem einzigen Bildschirm anzeigt;
**dadurch gekennzeichnet, dass**:
der genannte, von mindestens Videoinformationen gebildete Inhalt außerdem mit Begleitinformationen korreliert wird, die mit der Anzahl Malen zusammenhängen, die die Stücke aufgezeichneter Daten jeweils wiedergegeben wurden;
und solche Wiedergabevorrichtungen weiter ein Wiedergabesteuerungsmittel umfasst, das die Wiedergabedauer jedes Stücks der zusammengefassten Daten basierend auf den Begleitinformationen verändert.

2. Vorrichtung zur Wiedergabe aufgezeichneter Daten nach Anspruch 1, wobei die Inhaltskennungen weiter jeweils einen Programmtitel für den damit assoziierten Inhalt umfassen.

3. Vorrichtung zur Wiedergabe aufgezeichneter Daten nach Anspruch 1, die weiter Folgendes umfasst:
ein manuelles Auswahlmittel, das eine beliebige der Inhaltskennung aus der Kennungsliste auswählt; und
wobei das Anzeigesteuerungsmittel das Wiedergabevideo der zusammengefassten Daten anzeigt, in denen die die ausgewählte Inhaltskennung enthaltenden aufgezeichneten Daten zusammengefasst sind.

4. Vorrichtung zur Wiedergabe aufgezeichneter Daten nach Anspruch 1, die weiter Folgendes umfasst:
ein automatisches Auswahlmittel, das die Inhaltskennungen aus der Kennungsliste sequenziell auswählt; und
wobei das Anzeigesteuerungsmittel das Wiedergabevideo der zusammengefassten Daten anzeigt, in denen die die ausgewählten Inhaltskennungen enthaltenden aufgezeichneten Daten zusammengefasst sind.

5. Vorrichtung zur Wiedergabe aufgezeichneter Daten nach Anspruch 1, wobei das Anzeigesteuerungsmittel weiter eine Wiedergabetaste zum Beauftragen der normalen Wiedergabe der aufgezeichneten Daten und/oder eine Bearbeitungstaste zum Beauftragen des Bearbeitens der aufgezeichneten Daten und/oder eine Löschtaste zum Beauftragen des Löschens der aufgezeichneten Daten auf dem einzigen Bildschirm anzeigt.

6. Vorrichtung zur Wiedergabe aufgezeichneter Daten nach Anspruch 1, wobei:
die Inhaltskennungen jeweils ein Aufzeichnungsanfangsdatum und eine Aufzeichnungsanfangszeit und einen Programmkanal umfassen,
das Speichermittel die Begleitinformationen speichert, die mit der Anzahl Male zusammenhängen, die die Stücke aufgezeichneter Daten jeweils wiedergegeben wurden, und
das Listenerzeugungsmittel die Inhaltskennungen der Kennungsliste basierend auf den Inhaltskennungen und/oder den Begleitinformationen umordnet.

7. Vorrichtung zur Wiedergabe aufgezeichneter Daten nach Anspruch 6, wobei das Anzeigesteuerungsmittel weiter eine Umordnungstaste zum Beauftragen der Umordnung auf dem einzigen Bildschirm anzeigt.

8. Vorrichtung zur Wiedergabe aufgezeichneter Daten nach Anspruch 1, wobei das Anzeigesteuerungsmittel weiter ein jeder Inhaltskennung der Kennungsliste entsprechendes Thumbnail anzeigt, wobei es sich bei dem Thumbnail um einen Teil der zusammengefassten Daten handelt, in denen die die Inhaltskennung enthaltenden aufgezeichneten Daten zusammengefasst sind.

9. Vorrichtung zur Wiedergabe aufgezeichneter Daten, die Folgendes umfasst:
ein Speichermittel, das mindestens ein aufgezeichnetes Datenstück speichert, in dem ein von mindestens Videoinformationen gebildeter Inhalt mit einer Inhaltskennung korreliert wird, um den Inhalt zu kennzeichnen;
ein Mittel zur Erzeugung zusammengefasster Daten, das zusammengefasste Daten der aufgezeichneten Daten basierend auf dem Inhalt erzeugt;
ein Listenerzeugungsmittel, das eine Kennungsliste erzeugt, die eine Liste der Inhaltskennung zeigt;
ein Anzeigesteuerungsmittel, das die erzeugte Kennungsliste und ein Wiedergabevideo des mindestens einen Stücks erzeugter zusammengefasster Daten auf einem einzigen Bildschirm anzeigt;
ein Wiedergabedurchsuchungsmittel, das einen Wiedergabekandidaten der aufgezeichneten Daten während der Wiedergabe und Anzeige der zusammengefassten Daten auf einer Anzeigevorrichtung durchsucht;
**dadurch gekennzeichnet, dass** es weiter Folgendes umfasst:
ein Löschungsdurchsuchungsmittel, das einen Löschungskandidaten der aufgezeichneten Daten während der Wiedergabe und Anzeige der zusammengefassten Daten auf einer Anzeigevorrichtung durchsucht; wobei
die Wiedergabedauer der zusammengefassten Daten mit dem Löschungsdurchsuchungsmittel kürzer ist als die Wiedergabedauer der zusammengefassten Daten mit dem Wiedergabedurchsuchungsmittel.

10. Programm, das einen Computer befähigt, als jedes Mittel in der Vorrichtung zur Wiedergabe aufgezeichneter Daten nach Anspruch 1 oder 9 zu funktionieren.

## Revendications

1. Dispositif de lecture de données enregistrées comportant :
un moyen de stockage qui stocke au moins un élément de données enregistrées où un contenu formé par au moins des informations vidéo est mis en corrélation avec un identificateur de contenu pour identifier le contenu ;
un moyen de génération de données agrégées qui génère des données agrégées des données enregistrées en fonction du contenu ;
un moyen de génération de liste qui génère une liste des identificateurs montrant une liste de l'identificateur de contenu ;
un moyen de commande d'affichage qui affiche la liste générée des identificateurs et une vidéo de lecture dudit au moins un élément de données agrégées générées sur un simple écran ;
**caractérisée en ce que** :
ledit contenu formé par au moins des informations vidéo est également mis en corrélation avec des informations connexes se rapportant au nombre de fois où chaque élément de données enregistrées a été lu ;
et ledit dispositif de lecture comporte par ailleurs
un moyen de commande de lecture qui varie le temps de lecture de chaque élément de données agrégées en fonction des informations connexes.

2. Dispositif de lecture de données enregistrées selon la revendication 1, dans lequel chaque identificateur de contenu comprend par ailleurs un titre de programme pour le contenu associé à celui-ci.

3. Dispositif de lecture de données enregistrées selon la revendication 1, comportant par ailleurs :
un moyen de sélection manuelle qui sélectionne l'un quelconque de l'identificateur de contenu dans la liste des identificateurs ; et
le moyen de commande d'affichage qui affiche la vidéo de lecture des données agrégées où les données enregistrées comprenant l'identificateur de contenu sélectionné sont agrégées.

4. Dispositif de lecture de données enregistrées selon la revendication 1, comportant par ailleurs :
un moyen de sélection automatique qui sélectionne de manière séquentielle les identificateurs de contenu dans la liste des identificateurs ; et
le moyen de commande d'affichage qui affiche la vidéo de lecture des données agrégées où les données enregistrées comprenant les identificateurs de contenu sélectionnés sont agrégées.

5. Dispositif de lecture de données enregistrées selon la revendication 1, dans lequel le moyen de commande d'affichage affiche par ailleurs au moins l'un quelconque parmi un bouton de lecture destiné à ordonner la lecture normale des données enregistrées, un bouton d'édition destiné à ordonner l'édition des données enregistrées, et un bouton de suppression destiné à ordonner la suppression des données enregistrées sur un simple écran.

6. Dispositif de lecture de données enregistrées selon la revendication 1, dans lequel
chacun des identificateurs de contenu comprend une date et une heure de démarrage d'enregistrement, et une chaîne de programme,
le moyen de stockage stocke les informations connexes se rapportant au nombre de fois où chaque élément de données enregistrées a été lu, et
le moyen de génération de liste restructure les identificateurs de contenu de la liste des identificateurs, en fonction d'au moins l'un des identificateurs de contenu et des informations connexes.

7. Dispositif de lecture de données enregistrées selon la revendication 6, dans lequel le moyen de commande d'affichage affiche par ailleurs un bouton de restructuration destiné à ordonner la restructuration sur un simple écran.

8. Dispositif de lecture de données enregistrées selon la revendication 1, dans lequel le moyen de commande d'affichage affiche par ailleurs une imagette miniature correspondant à chaque identificateur de contenu de la liste des identificateurs, l'imagette miniature faisant partie des données agrégées où les données enregistrées comprenant l'identificateur de contenu sont agrégées.

9. Dispositif de lecture de données enregistrées comportant :
un moyen de stockage qui stocke au moins un élément de données enregistrées où un contenu formé par au moins des informations vidéo est mis en corrélation avec un identificateur de contenu pour identifier le contenu ;
un moyen de génération de données agrégées qui génère des données agrégées des données enregistrées en fonction du contenu ;
un moyen de génération de liste qui génère une liste des identificateurs montrant une liste de l'identificateur de contenu ;
un moyen de commande d'affichage qui affiche la liste générée des identificateurs et une vidéo de lecture dudit au moins un élément de données agrégées générées sur un simple écran ;
un moyen de recherche de lecture qui recherche un candidat de lecture des données enregistrées tout en effectuant la lecture et l'affichage des données agrégées sur un dispositif d'affichage ;
**caractérisé en ce qu'**il comporte par ailleurs :
un moyen de recherche de suppression qui recherche un candidat de suppression des données enregistrées, tout en effectuant la lecture et l'affichage des données agrégées sur le dispositif d'affichage ; dans lequel
le temps de lecture des données agrégées avec le moyen de recherche de suppression est plus court que le temps de lecture des données agrégées avec le moyen de recherche de lecture.

10. Programme qui permet à un ordinateur de fonctionner comme chaque moyen dans le dispositif de lecture de données enregistrées selon la revendication 1 ou la revendication 9.
